# EUROPÄISCHE PATENTSCHRIFT

(11) **EP 3 326 031 B1**
(45) Veröffentlichungstag und Bekanntmachung des Hinweises auf die Patenterteilung: **30.09.2020**
(21) Anmeldenummer: 16741250.1
(22) Anmeldetag: 01.07.2016
(51) Int. Cl.: G03B 9/02, G03B 9/06, G02B 5/00

(54) **ELLIPSENARTIGE BLENDE FÜR EIN KAMERAOBJEKTIV BZW. FÜR EINE FOTO- ODER FILMKAMERA**
ELLIPSE-LIKE APERTURE FOR A CAMERA LENS ASSEMBLY OR FOR A PHOTO OR FILM CAMERA
DIAPHRAGME ELLIPTIQUE POUR OBJECTIF D'APPAREIL DE PRISE DE VUES OU POUR APPAREIL PHOTO OU CAMÉRA

(30) Priorität: 23.07.2015 DE 102015111985
(43) Veröffentlichungstag der Anmeldung: 30.05.2018
(60) Teilanmeldung: 18153177.3
(73) Patentinhaber: Vantage Film GmbH, 92637 Weiden (DE)
(72) Erfinder: MÄRTIN, Peter, 92637 Weiden (DE); PRZYBYLLA, Alexander, 86899 Landsberg (DE)
(74) Vertreter: Ruschke, Hans Edvard
(86) Internationale Anmeldenummer: PCT/EP2016/065511
(87) Internationale Veröffentlichungsnummer: WO 2017/012843

(56) Entgegenhaltungen:
- GB-A- 2 263 344
- JP-A- 2009 271 123
- US-A- 1 302 359
- US-A- 3 433 142
- US-A- 4 047 807

## Beschreibung

### GEBIET DER TECHNIK

Die vorliegende Erfindung betrifft eine ellipsenartige Blende für ein Foto- oder Filmkameraobjektiv bzw. für eine Foto- oder Filmkamera.

### HINTERGRUND UND STAND DER TECHNIK

Fotographische und Filmkameraobjektive sind in der Regel mit kreisförmigen Irisblenden ausgestattet, die aus mehreren Blendenlamellen bestehen und bei allen Blendenöffnungen eine annähernd kreisförmige Öffnung transversal zur Achse der Objektive aufweisen. Die Kreisförmigkeit über alle Blendenöffnungen ist wünschenswert, wenn der Qualität der aus sphärischen Linsen bestehenden Objektiven durch möglichst wenig Bildfehler im aufgezeichneten Bild Rechnung getragen werden soll.

Andererseits mag es Anwendungen geben, wo im Gegenteil gerade eine Aberration oder Verfremdung des aufgezeichneten Bildes erzielt werden soll. Das kann z.B. durch Vorsätze oder durch die Konstruktion der Objektive selbst erfolgen. Im letzteren Fall kann ein Objektiv so konstruiert sein, dass es zu einer gewünschten Verzeichnung kommt (wie z.B. bei Fisheye-Objektiven), es kann aber auch der Fall sein, dass ein Objektiv aus ganz anderen Gründen eine Konstruktion aufweist, die als Nebeneffekt eine Verfremdung mit sich führt - das ist bei anamorphotischen Objektiven der Fall.

Anamorphotische Objektive, auch kurz "Anamorphoten" genannt, sind in der Filmindustrie seit den 50er Jahren bekannt. Beeinflusst durch die damals stark voranschreitende Ausbreitung des Fernsehens, begann die Filmindustrie in dieser Zeit, Filme im Breitwandformat zu produzieren, um sich vom Fernsehen - nicht zuletzt in qualitativer Hinsicht - absetzen zu können. So führte z.B. die 20^{th} Century Fox das CinemaScope-Verfahren ein, bei dem ein Anamorphot verwendet wird, um horizontal breitere Bilder aufzunehmen und sie zur Aufzeichnung auf das Filmmaterial horizontal zu stauchen, sodass sie auf den beim herkömmlichen Film verfügbaren Platz passen; das auf dem Film gestauchte Bild wird dann bei der Projektion unter Verwendung eines zweiten Anamorphoten wieder horizontal gestreckt, und das Endresultat ist ein auf die Kinoleinwand projiziertes Breitwandbild. Das anamorphotische Verfahren wird also verwendet, um bei Verwendung des herkömmlichen Filmformats dennoch ein breiteres Projektionsformat zu erreichen.

Um dieses horizontale Stauchen und Strecken zu erreichen, umfassen die Anamorphoten zylindrische Linsen, die orthogonal unterschiedliche Brennweiten (z.B. horizontal 50 mm und vertikal 100 mm bei einem 2-fach Anamorphoten, d.h. einem Anamorphoten mit Stauchungsfaktor 2) erzeugen. Werden diese zylindrischen Linsen wie ein Vorsatz vor der sphärischen Optik positioniert, wirken sie wie ein Weitwinkelobjektiv und erhöhen daher die Schärfentiefe des optischen Gesamtsystems (also in z-Richtung), jedoch nur entlang einer der Transversalachsen des optischen Systems (bei horizontaler Stauchung horizontal in x-Richtung), während dieser Effekt entlang der anderen Transversalachse (bei horizontaler Stauchung vertikal in y-Richtung) nicht auftritt. Das führt zu einer bleibenden Verfremdung bzw. Abstraktion der unscharfen Bereiche des aufgezeichneten Bildes: Außerhalb der Schärfenebene entstehen ovale unscharfe Verläufe, die alle Details, die im Unschärfebereich liegen, beeinflussen, indem sie verzerrt als ovale Verläufe abgebildet werden (analoges gilt für die Spitzlichter, die nicht als helle kreisrunde Scheibchen abgebildet werden, sondern ebenfalls als ovale) - diese Verfremdung ist nicht vollständig rückgängig zu machen und bleibt auch bei Anwendung des zweiten horizontal wieder streckenden Anamorphoten zur Projektion bestehen. Während daher Gegenstände und Personen im Schärfebereich nach der Projektion (d.h. bei Anwendung des zweiten Anamorphoten) wie gewünscht wieder unverzerrt bzw. unverfremdet dargestellt werden, erscheinen sie im Unschärfebereich schlanker, da der Unschärfebereich die bereits erwähnte bleibende Abstraktion aufweist. (In diesem Zusammenhang ist noch anzumerken, dass die zylindrischen Linsen auch hinter der sphärischen Optik positioniert werden können, jedoch unter Aufgabe des oben erwähnten Effekts.) Die Stärke dieses Effekts hängt vom Stauchungsfaktor, d.h. vom Verhältnis der beiden Brennweiten des Anamorphoten ab: je unterschiedlicher die Brennweiten und damit der Stauchungsfaktor, umso stärker der Effekt.

Diese Verfremdung bzw. Abstraktion der unscharfen Bereiche war zunächst ein bei Breitwandfilmen in Kauf genommener Nebeneffekt, der sich jedoch schnell zu einer durchaus gewünschten Bildästhetik entwickelt hat, die im Laufe der letzten Jahrzehnte geradezu Kultstatus erlangt hat. So werden schon seit längerem Anamorphoten für Filmaufnahmen eingesetzt, nur um diesen Effekt zu erzeugen, wobei sich ein Stauchungsfaktor von 2 bisher als optimal für den bildästhetischen Effekt erwiesen hat.

Anamorphoten weisen jedoch auch unerwünschte Nachteile auf. Wenn die zylindrischen Linsen vor der aufnehmenden sphärischen Optik positioniert sind, um den oben erläuterten bildästhetischen Effekt zu erzeugen, führen die zylindrischen Linsen der Anamorphoten zu einer tonnenförmigen geometrischen Verzeichnung, die insbesondere bei kurzen Brennweiten zu durchaus störenden Krümmungen gerader Linien führt. Darüberhinaus ergeben sich Aberrationen, d.h. im Bildfeld entstehen im oberen und unteren Bereich sowie in den Ecken und an den seitlichen Rändern Unschärfen, die sich bei voll geöffneter Blende störend bemerkbar machen. Des weiteren haben Anamorphoten eine beschränkte Naheinstellgrenze und eine geringere Lichtstärke. Darüberhinaus ändert sich der Bildausschnitt beim Fokussieren und es werden bei digitaler Aufzeichnung angepasste Sensoren benötigt, die dem gestauchten Bildausschnit entsprechen. Schließlich sind Anamorphoten in der Regel aufwendiger in der Herstellung und dasurch weniger robust sowie aufgrund ihrer größeren Bauform und ihres größeren Gewichts unbequemer in der Handhabung.

Es besteht also ein Bedarf an der Verwirklichung der oben beschriebenen Bildästhetik der Anamorphoten, d.h. deren Verfremdung bzw. Abstraktion der unscharfen Bereiche des aufgezeichneten Bildes, jedoch ohne die Nachteile dieser Objektive in Kauf nehmen zu müssen.

### ZUSAMMENFASSUNG DER ERFINDUNG

Es ist daher ein Ziel der vorliegenden Erfindung, ein optisches System für die Filmindustrie vorzusehen, das bei Beibehaltung der Bildästhetik der Anamorphoten, d.h. der Verfremdung bzw. Abstraktion der unscharfen Bereiche des aufgezeichneten Bildes, zu besserer Bildqualität führt sowie leichter herzustellen, einfacher in der Handhabung und flexibler in der Anwendung ist.

Dies ist erfindungsgemäß erreicht worden mit einer Blende für ein Foto- oder Filmkameraobjektiv gemäß Anspruch

Andere vorteilhafte Merkmale der erfindungsgemässen Blende sind in dem Unteranspruch offenbart.

### KURZBESCHREIBUNG DER ZEICHNUNGEN

- Fig. 1: zeigt ein mit einem anamorphotischen System nach dem Stand der Technik auf einen 35 mm Film abgebildetes ursprünglich rundes Objekt;
- Fig. 2A-E: zeigen eine erste Ausführungsform der erfindungsgemäßen Blende bei unterschiedlichen Öffnungen der Irisblende;
- Fig. 3A: zeigt eine zweite nicht erfindungsgemäße Ausführungsform der Blende in einer Schrägansicht von oben;
- Fig. 3B: zeigt das Rückteil der Blende aus Fig. 3A;
- Fig. 3C: zeigt eine der beiden Lamellen des Linearblendenanteils der Blende aus Fig. 3A;
- Fig. 3D: zeigt den Abschlussring der Blende aus Fig. 3A;
- Fig. 3E: zeigt den Drehring der Blende aus Fig. 3A;
- Fig. 4A-F: zeigen die Blende gemäß der zweiten Ausführungsform bei unterschiedlichen Öffnungen der Irisblende;
- Fig. 5: zeigt eine dritte nicht erfindungsgemäße Ausführungsform der Blende;
- Fig. 6A-E: zeigen die Blende gemäß der dritten Ausführungsform bei unterschiedlichen Öffnungen der Irisblende.

### BESCHREIBUNG DER BEVORZUGTEN AUSFÜHRUNGSFORMEN

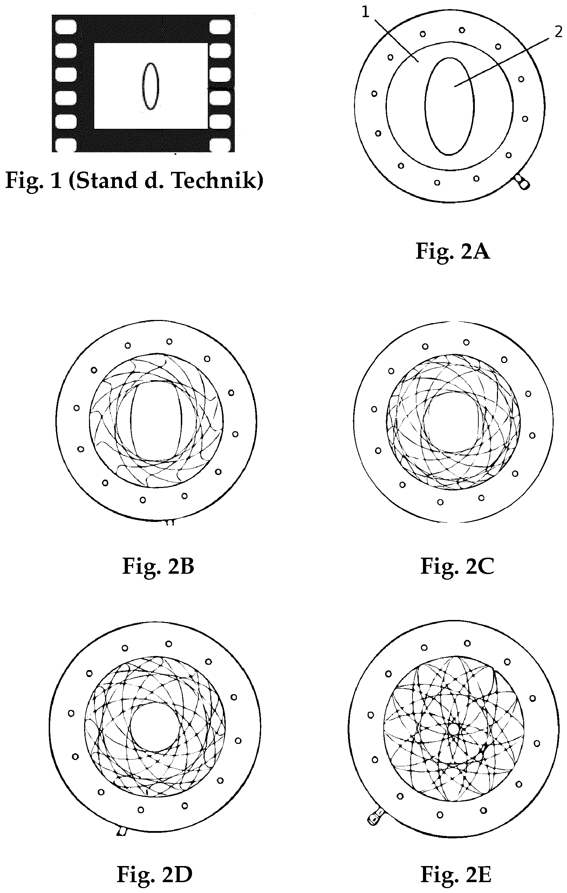

Fig. 1 zeigt einen herkömmlichen 35 mm Film, auf dem ein Objekt mit einem 2-fachen horizontalen Stauchfaktor - also unter Verwendung eines 2-fachen Anamorphoten - nach dem Stand der Technik abgebildet ist. Das ursprüngliche Objekt war ein Kreis, der durch die 2-fache horizontale Stauchung nun zu einem Oval geworden ist. Zur anschließenden Projektion wird ein weiterer 2-facher Anamorphot verwendet, um das Filmbild wieder zu entzerren und ein Breitwandbild zu erhalten, wie es schon das eingangs beschriebene System von CinemaScope in den 50er Jahren verwendet hatte. Wie oben auseinandergesetzt, werden die Gegenstände und Personen im Schärfebereich bei der Projektion wie gewünscht wieder entzerrt, im Unschärfebereich jedoch bleibt eine Verfremdung erhalten. Im vorliegenden Fall wird also bei der Projektion aus dem auf dem Film befindlichen Oval wieder ein Kreis, wenn er im Schärfebereich liegt, wohingegen das Oval nicht wieder ganz zu einem Kreis wird, wenn es im Unschärfebereich liegt - handelt es sich beim abgebildeten Objekt um einen Menschen, erscheint er, wenn er sich im Unschärfebereich befindet, schlanker. Wie bereits erwähnt, hat sich dieser bei Breitwandfilmen zunächst in Kauf genommene Nebeneffekt schnell zu einer gewünschten Bildästhetik entwickelt.

Die Erfinder der vorliegenden Erfindung haben nun überraschenderweise herausgefunden, dass sich dieser Effekt anstelle mit den (anwendungstechnisch und optisch in anderer Hinsicht nachteiligen) Anamorphoten auch dadurch erzielen lässt, dass ein herkömmliches sphärisches Objektiv mit einer ellipsenartigen Blende versehen wird, deren Längsachse vertikal verläuft. Der Begriff "ellipsenartig" soll hier sowohl reine Ellipsen als auch alle solche Formen umfassen, die länglich sind und gekrümmte Bestandteile aufweisen - dementsprechend werden die von Ellipsen bekannten Begriffe "Hauptachse" und "Nebenachse" sinngemäß auf diese Formen übertragen, indem mit "Hauptachse" die lange Achse und mit "Nebenachse" die kurze Achse der ellipsenartigen Form bezeichnet wird. Der Stauchungsfaktor der Anamorhopten - der, wie eingangs erläutert, für den bildästhetischen Effekt verantwortlich ist - entspricht übertragen auf eine Ellipse dem Verhältnis zwischen deren Haupt- und Nebenachse und kann so auch sinngemäß auf ellipsenartige Formen im obigen Sinne übertragen werden (eine reale Stauchung des aufgezeichneten Bildes wie bei den Anamorphoten findet nicht statt). Da sich, wie eingangs erwähnt, ein Stauchungsfaktor von 2 als optimal für den bildästhetischen Effekt erwiesen hat, entspricht das bei einer ellipsenartigen Öffnung einem Verhältnis zwischen Haupt- und Nebenachse von 2 : 1.

Eine gewöhnliche Irisblende nach dem Stand der Technik besteht aus einem stationären Grundkörper, in den mehrere Lamellen, insbesondere Kreislamellen, gesteckt werden. Jede der Kreislamellen hat eine sichelförmige Kontur und weist Zylinderzapfen auf ihrer Ober- und Unterseite auf, die sich an gegenüberliegenden Enden der Kreislamelle befinden. Einer der Zapfen wird in den Grundkörper gesteckt, damit die Kreislamelle eine Drehbewegung um diesen Zapfen ausführen kann, der andere Zapfen wird in der Nut eines Drehrings geführt, wobei die Anzahl der Nuten im Drehring der Anzahl der Kreislamellen entspricht. Je nach Richtung, in die der Drehring nun gedreht wird, werden die Kreislamellen jeweils um ihren im Grundkörper befindlichen Zapfen gedreht und vollführen durch den in der Nut des Drehrings geführten Zapfen eine Schwenkbewegung aufeinander zu oder voneinander weg, was zu einem Schließen bzw. Öffnen der von den Kreislamellen definierten Öffnung führt - das entspricht dem Abblenden bzw. Aufblenden der Irisblende.

In einer ersten Ausführungsform umfasst die erfindungsgemäße ellipsenartige Blende eine derartige herkömmliche Irisblende, die mit einer zusätzlichen unbeweglichen Scheibe 1 mit einer festen ellipsenförmigen Öffnung 2 versehen ist, deren Hauptachse vertikal verläuft. Die Scheibe kann in z-Richtung (also in Richtung der optischen Achse) vor oder hinter der Irisblende angeordnet sein. Fig. 2A - 2E zeigen ein Beispiel dieser Anordnung, wobei die Irisblende zunehmend abgeblendet wird: In Fig. 2A ist die Irisblende vollständig geöffnet, wodurch die ellipsenförmige Öffnung 2 der Scheibe 1 voll zum Tragen kommt, da die Hauptachse der Ellipse kleiner oder gleich dem Durchmesser der vollständig geöffneten Irisblende ist. Beim Abblenden gem. Fig. 2B - 2E überdeckt die Irisblende zunehmend die ellipsenförmige Öffnung 2 der Scheibe 1, bis schließlich der Durchmesser der weiter abgeblendeten Irisblende genau so groß ist wie die Nebenachse der Ellipse (Fig. 2D) oder sogar kleiner (Fig. 2E).

Zu Beginn (d.h. bei offener oder nur gering abgeblendeter Irisblende) erhält man also einen vollständig ellipsenförmigen Lichtdurchlass (s. Fig. 2A), während am Ende (d.h. bei stark oder ganz abgeblendeter Irisblende) ein vollständig kreisförmiger Lichtdurchlass vorhanden ist (s. Fig. 2D und 2E). Wie auch den Zwischenstufen gem. Fig. 2B und 2C zu entnehmen, wird der zu Beginn ellipsenförmige Lichtdurchlass der erfindungsgemäßen Blende beim Abblenden also immer gedrungener, d.h. kreisförmiger. Das kann in bestimmten Fällen ein durchaus gewünschter Effekt sein, denn beim Abblenden nimmt die Schärfentiefe eines optischen Systems zu, wodurch sich im Gegenzug der Unschärfebereich - der sich durch den oben erörterten bildästhetischen Effekt der Anamorphoten auszeichnet - verkleinert. Das kann nun dadurch kompensiert werden, dass der anamorphotische Faktor, d.h. der Stauchungsfaktor in horizontaler Richtung, verringert wird. Wie eingangs beschrieben, wird das horizontale Stauchen und Strecken mittels der Anamorphoten durch zylindrische Linsen erreicht, die orthogonal unterschiedliche Brennweiten aufweisen und zu einem Weitwinkeleffekt horizontal in x-Richtung führen, wodurch die Schärfentiefe des optischen Gesamtsystems (in z-Richtung) horizontal in x-Richtung erhöht wird. Diese Ausdehnung des Schärfentiefenbereichs fällt geringer aus, je geringer der Stauchungsfaktor in horizontaler Richtung ist, d.h. je mehr sich dieser Faktor der 1 nähert, was einer Reduktion der Stauchung bis hin ihrer völligen Abwesenheit entspricht - und damit wieder der ursprünglichen Kreisform. Das jedoch entspricht, übertragen auf die ellipsenartige Blende, dem beim Abblenden zunehmend kreisförmiger werdenden Lichtdurchlass der erfindungsgemäßen Blende der ersten Ausführungsform. Auf diese Weise wird natürlich der bildästhetische Effekt - der ja gerade durch die unterschiedlichen Schärfentiefen in x- und y-Richtung erzeugt wird - selbst verringert, der Bereich, in dem er auftritt, jedoch vergrößert.

Das Größenverhältnis zwischen der ellipsenförmigen Öffnung 2 der Scheibe 1 und der Irisblende kann auch ein anderes sein als in Fig. 2A - 2E gezeigte. Die ellipsenförmige Öffnung 2 kann z.B. größer sein, sodass schon von Beginn an (also bei voll geöffneter Irisblende) kein rein ellipsenförmiger Lichtdurchlass vorhanden ist. Des weiteren kann umgekehrt aber auch ganz auf die Irisblende verzichtet werden, wenn das Abblenden (etwa durch die Lichtverhältnisse) keine große Bedeutung hat und stets die reine Ellipsenform gewünscht ist. Schließlich muss die Öffnung 2 der Scheibe 1 nicht rein ellipsenförmig, sondern kann allgemein ellipsenartig sein.

Es ist für die Bildästhetik von größter Bedeutung, dass die ellipsenartige Öffnung 2 der Scheibe 1 - und damit natürlich auch deren Achsenausrichtung - stationär ist, denn der oben erwähnte "Verschlankungseffekt" im Unschärfebereich, insbesondere von Personen, wird nur auf diese Weise erreicht. Der gegenteilige Effekt, d.h. eine "Verdickung" von im Unschärfebereich befindlichen Personen, kann natürlich erreicht werden, wenn die Hauptachse der ellipsenartigen Öffnung 2 horizontal verläuft, was einer vertikalen Stauchung entspricht.

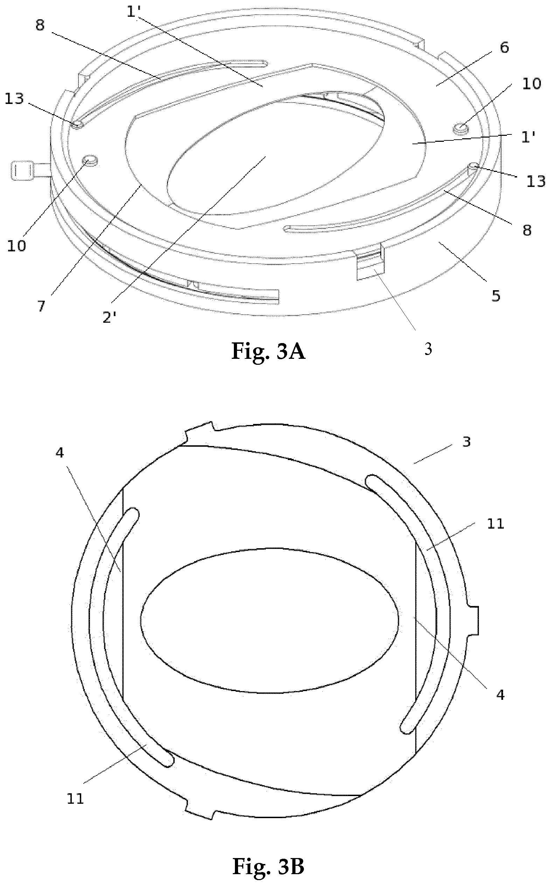

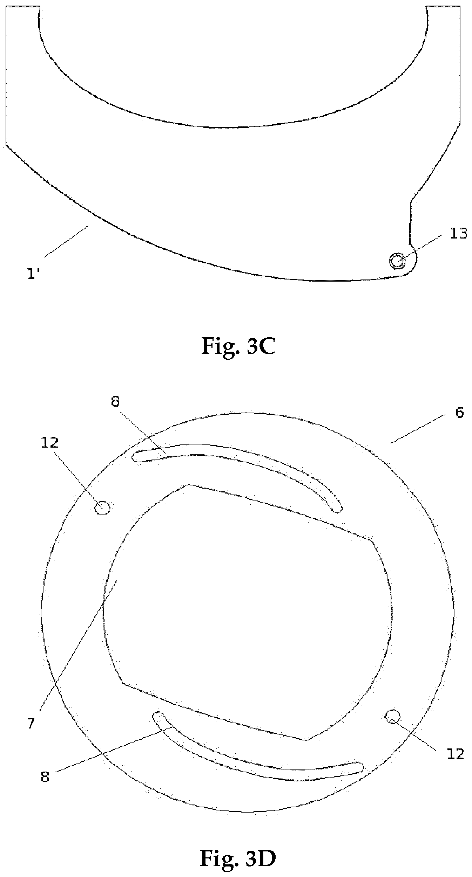

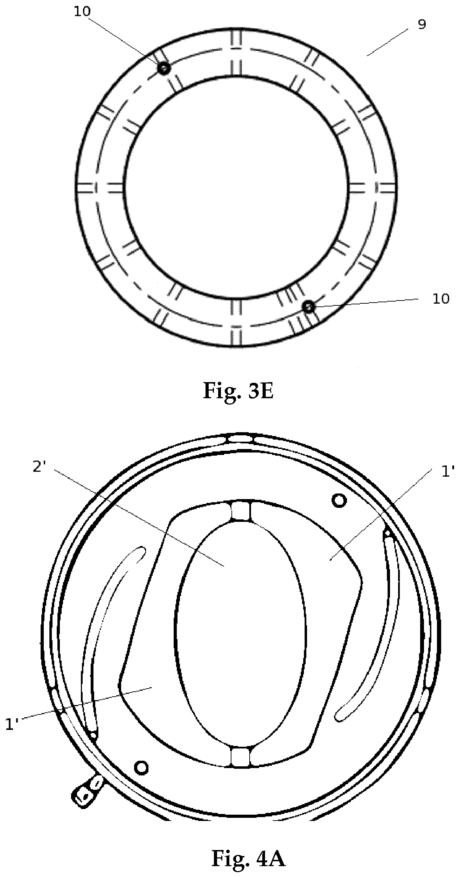

Eine zweite Ausführungsform der Blende ist in Fig. 3A-E und 4A-F dargestellt. Wie in der ersten Ausführungsform ist eine Irisblende vorgesehen, die um weitere Blendenelemente ergänzt ist. In z-Richtung (also in Richtung der optischen Achse) vor oder hinter der Irisblende befindet sich ein unbewegliches Rückteil 3 in Form einer Scheibe, die in der Mitte eine Öffnung sowie zwei Führungen 4 (z.B. in Form von Kanten) aufweist und fest mit dem Grundkörper 5 der Irisblende verbunden ist (s. Fig. 3A und 3B). Weiterhin ist auf der der Irisblende abgewandten Seite des Rückteils 3 ein Abschlussring 6 vorgesehen, der ebenfalls eine Öffnung 7 sowie zwei gekrümmte Nuten 8 aufweist (s. Fig. 3A und 3D) und im Gegensatz zum Rückteil 3 drehbar ist: Der Drehring 9 der Irisblende besitzt zwei Zapfen 10, die sich durch eine jeweilige Nut 11 im Rückteil 3 in zwei Bohrungen 12 im Abschlussring 6 erstrecken (s. Fig. 3A und 3E) - wird nun der Drehring 9 gedreht, dreht sich auch der Abschlussring 6. Zwischen dem Abschlussring 6 und dem Rückteil 3 befinden sich zwei Lamellen 1', die jeweils an der der anderen Lamelle zugewandten Kante eine Halbellipse bilden und daher zwischen sich bei vollständig geöffneter Irisblende eine vollständig ellipsenförmige Öffnung 2' bilden (s. Fig. 3A und 3C sowie Fig. 4A). Die Lamellen 1' weisen auf der dem Abschlussring 6 zugewandten Seite jeweils einen Zapfen 13 auf, der sich in der jeweiligen Nut 8 des Abschlussrings 6 bewegt - wird der Drehring 9, und damit der Abschlussring 6, gedreht, wird dessen Drehbewegung in eine lineare Bewegung der beiden Lamellen 1' umgewandelt, sodass die zwischen den beiden Lamellen 1' definierte Öffnung 2' verringert wird, indem sie sich beim Abblenden linear horizontal (und damit senkrecht zur Hauptachse der zu Beginn ellipsenförmigen Öffnung) nach innen aufeinander zu bewegen und daher wie eine Linearblende wirken. Das Abblenden der Irisblende führt also gleichzeitig ein Abblenden der durch die Lamellen 1' definierten Linearblende mit sich. Die beiden Lamellen 1' können an ihren radial äußeren Kanten in der jeweiligen Führung 4 des Rückteils 3 bewegt werden oder sie können auf der dem Rückteil 3 zugewandten Seite jeweils einen Vorsprung aufweisen, der sich in der jeweiligen Führung 4 des Rückteils 3 bewegt, wodurch die Lamellen 1' in ihrer Linearbewegung zusätzlich unterstützt werden.

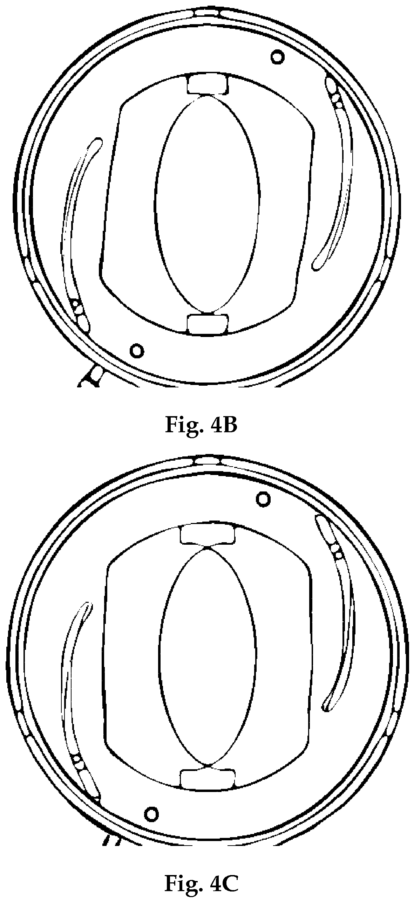

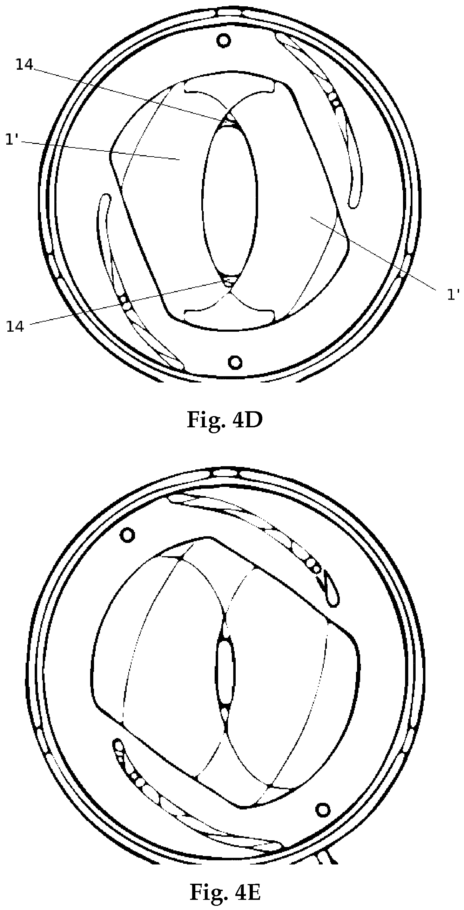

Durch diese Überlagerung der Kreislamellen 14 der Irisblende und der Lamellen 1' der Linearblende erhält man, wie Fig. 4A - 4F zu entnehmen, einen ellipsenartigen Lichtdurchlass während des gesamten Abblendvorgangs: In Fig. 4A ist die Irisblende vollständig geöffnet und die Öffnung 2' der Linearblende ist vollständig ellipsenförmig, d.h. die Irisblende kommt noch nicht zum Tragen. Fig. 4B zeigt die erste Stufe des Abblendens, wo die Irisblende zwar noch immer nicht zum Tragen kommt, die Öffnung 2' der Linearblende jedoch durch das Gegeneinanderschieben der beiden Lamellen 1' am oberen und unteren Ende Spitzen aufweist und daher nicht mehr vollständig ellipsenförmig, sondern allgemein ellipsenartig ist. Beim weiteren Abblenden gem. Fig. 4D kommt erstmals die Irisblende zum Tragen und "rundet" die (durch das fortschreitende Gegeneinanderschieben der beiden Lamellen 1' immer ausgeprägter werdenden) Spitzen der ellipsenartigen Öffnung 2' der ebenfalls weiter geschlossenen Linearblende etwas ab. Dieses "Abrunden" der oberen und unteren Spitzen der Öffnung 2' der Linearblende durch die sich ebenfalls weiter schliessende Irisblende setzt sich dann verstärkt beim weiteren Abblenden gem. Fig. 4D - 4F fort.

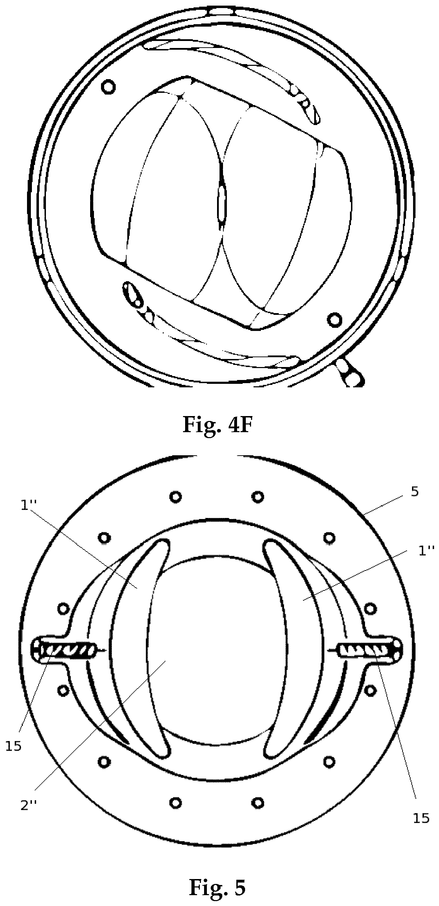

Zu Beginn (d.h. bei offener Iris- und Linearblende) erhält man also einen vollständig ellipsenförmigen Lichtdurchlass (s. Fig. 4A), während beim Abblenden ein zunehmend schmaler werdender allgemein ellipsenartiger Lichtdurchlass vorhanden ist, der an den rechten und linken Seiten durch die Krümmung der Linearblendenöffnung und an den oberen und unteren Enden durch die Krümmung der Irisblende geprägt ist (s. Fig. 4E und 4F). Wie auch den Zwischenstufen gem. Fig. 4C und 4D zu entnehmen, wird der zu Beginn vollständig ellipsenförmige Lichtdurchlass der nicht erfindungsgemäßen Blende beim Abblenden also immer schmaler bzw. schlanker, während die oberen Enden immer stärker abgeflacht werden. Dieses Schmalerwerden des Lichtdurchlasses beim Abblenden ist dem Abblendverhalten der ersten Ausführungsform entgegengesetzt und mag ebenfalls in bestimmten Fällen erwünscht sein, z.B. wenn es weniger um die Quantität des bildästhetischen Effekts (also um die Ausdehnung des Unschärfebereichs, der sich durch den oben erörterten bildästhetischen Effekt der Anamorphoten auszeichnet) als vielmehr um dessen Qualität geht: Wie im Zusammenhang mit der ersten Ausführungsform erläutert, nimmt die Schärfentiefe eines optischen Systems beim Abblenden zu, wodurch sich im Gegenzug der Unschärfebereich verkleinert, was dadurch kompensiert werden kann, dass der anamorphotische Faktor, d.h. der Stauchungsfaktor in horizontaler Richtung, verringert wird (was wiederum auf Kosten des bildästhetischen Effekts selbst geht) - soll demgegenüber der bildästhetische Effekt selbst verstärkt werden, muss der Stauchungsfaktor in horizontaler Richtung vergrößert werden (was wiederum auf Kosten der Ausdehnung bzw. Quantität des bildästhetischen Effekts geht).

Die Linearbewegung der Lamellen 1' kann auch auf andere Weise bewirkt werden als über die Kopplung des Drehrings 9 mit dem Abschlussring 6 und die in den Nuten 8 des Abschlussringes 6 geführten Zapfen 13 der Lamellen 1' - wesentlich zur Umsetzung des Grundgedankens ist lediglich die Linearbewegung der Lamellen 1', damit die Hauptachse der ellipsenartigen Öffnung 2' nicht ihre Orientierung ändert. Die Bedeutung der Beibehaltung der Achsenausrichtung der ellipsenartigen Öffnung ist bereits im Zusammenhang mit der ersten Ausführungsform erörtert worden. Auch das Rückteil 3 ist kein für die Umsetzung des Grundgedankens wesentlicher Bestandteil, sondern lediglich eine konstruktive Maßnahme, um den beweglichen Lamellen 1' zusätzliche Stabilität zu verleihen - ist andererseits eine größtmögliche Stabilität für die Lamellen 1' gewünscht, kann die Öffnung im Rückteil 3 der größten ellipsenförmigen Öffnung 2' zwischen den Lamellen 1' entsprechen (wie in Fig. 3B gezeigt), um die größtmögliche Auflagefläche zu erreichen.

Wie bei der ersten Ausführungsform kann auch hier das Größenverhältnis zwischen der von den beiden Lamellen 1' zu Beginn definierten ellipsenförmigen Öffnung 2' der Linearblende und der Irisblende ein anderes sein als das in Fig. 4A - 4F gezeigte. Die ellipsenförmige Öffnung 2' kann z.B. kleiner sein, sodass die "Abrundung" der oberen und unteren Spitzen des Lichtdurchlasses der Linearblende erst bei noch weiterem Abblenden eintritt, oder umgekehrt größer, sodass beim Abblenden nie Spitzen an den oberen und unteren Enden des Lichtdurchlasses vorhanden sind. Des weiteren muss die Öffnung 2 der Scheibe 1 zu Beginn nicht rein ellipsenförmig, sondern kann allgemein ellipsenartig sein. Schließlich kann auch wieder ganz auf die Irisblende verzichtet werden, wobei dann der Drehring 9 nur zum Drehen des Abschlussrings 3 dient oder der Abschlussring direkt über geeignete Greifelemente gedreht wird und das Abblenden lediglich durch die Linearverschiebung der Lamellen 1' erfolgt.

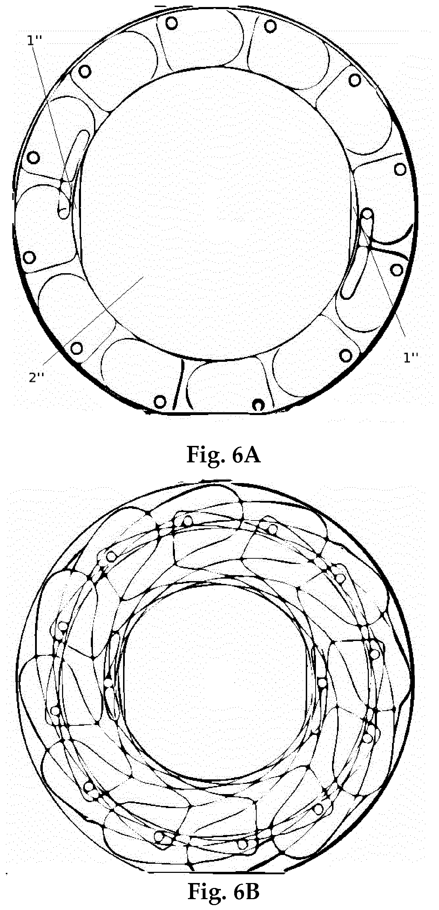

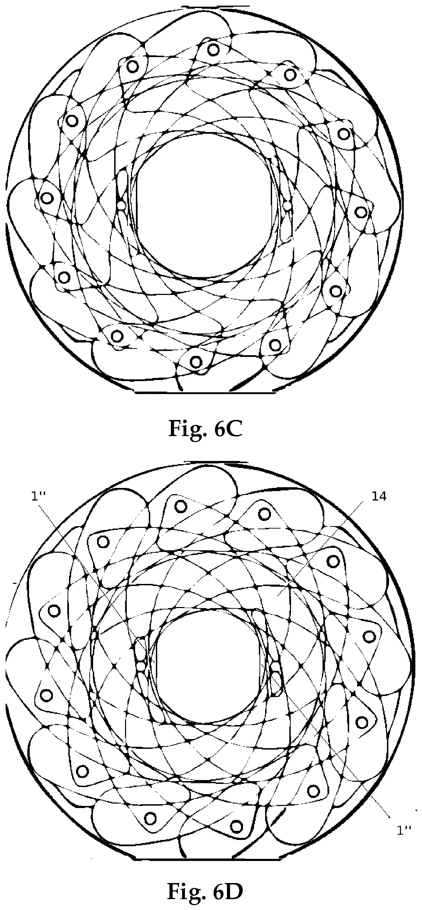

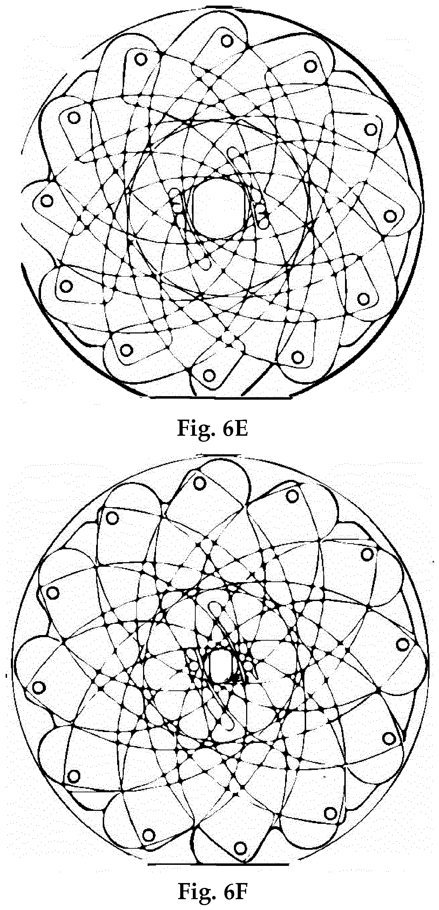

Eine dritte Ausführungsform der Blende ist in Fig. 5 und 6A-F dargestellt. Wie in der ersten und zweiten Ausführungsform ist eine Irisblende vorgesehen, die um weitere Blendenelemente ergänzt ist. Fig. 5 ist zu entnehmen, dass zusätzlich zu den Kreislamellen 14 an der linken und rechten Seite des Grundkörpers 5 der Irisblende jeweils eine weitere Lamelle 1" gesichert und in Richtung zum Außenumfang des Grundkörpers 5 z.B. durch Federn 15 vorgespannt ist, während die Lamellen 1" in Richtung des Zentrums mit den Kreislamellen 14 der Irisblende z.B. durch eine die jeweilige(n) Kreislamelle(n) 14 umgreifende Klemme verbunden sind. Eine andere Art der Befestigung und Mitführung der Lamellen 1" kann darin bestehen, sie über Zapfen und Nuten oder Bohrungen an mehreren Kreislamellen 14 der Irisblende zu sichern. Zwischen sich definieren die Lamellen 1" rechts und links die Längsseiten einer ellipsenartigen Öffnung 2", deren obere und untere Begrenzungen durch die Kreislamellen 14 der Irisblende definiert werden. Die Kontur der Lamellen 1" zum Zentrum hin kann konkav oder auch gerade sein. Wird die Irisblende geschlossen, bewegen sich die Lamellen 1" linear in horizontaler Richtung (und damit senkrecht zur Hauptachse der ellipsenartigen Öffnung) nach innen aufeinander zu. Das Abblenden der Irisblende führt also wie in der zweiten Ausführungsform gleichzeitig ein Abblenden der durch die Lamellen 1" definierten Linearblende mit sich, indem diese linear aufeinander zu bewegt werden.

Durch diese Überlagerung der Kreislamellen 14 der Irisblende und der Lamellen 1" der Linearblende erhält man, wie Fig. 6A - 6F zu entnehmen ist, einen ellipsenartigen Lichtdurchlass während des gesamten Abblendvorgangs: Bereits im aufgeblendeten Zustand ist der Lichtdurchlass bereits ellipsenartig und nur fast kreisförmig, da auf dessen rechter und linker Seite die kreisförmige Irisblende durch die Lamellen 1" der Linearblende (deren Innenkonturen hier gerade ausgeführt sind) abgedeckt und dadurch horizontal verengt wird. Bei weiterem Abblenden gem. Fig. 6B - 6F wird der ellipsenartige Lichtdurchlass durch das fortschreitende Gegeneinanderschieben der beiden Lamellen 1" wie bei der zweiten Ausführungsform immer schmaler.

Am Ende (d.h. bei stark oder ganz abgeblendeter Iris- und Linearblende) ist also wie bei der zweiten Ausführungsform ein schmaler ellipsenartiger Lichtdurchlass vorhanden, der an den rechten und linken Seiten durch die Innenkontur der Lamellen 1" der Linearblendenöffnung 2" und an den oberen und unteren Enden durch die Krümmung der Irisblende geprägt ist. Dieses Schmalerwerden des Lichtdurchlasses beim Abblenden mag, wie bereits im Zusammenhang mit der zweiten Ausführungsform erläutert, in bestimmten Anwendungsfällen erwünscht sein, z.B. wenn es weniger um die Quantität des bildästhetischen Effekts (also um die Ausdehnung des Unschärfebereichs, der sich durch den oben erörterten bildästhetischen Effekt der Anamorphoten auszeichnet) als vielmehr um dessen Qualität geht.

Die Linearbewegung der Lamellen 1" kann auch auf andere Weise bewirkt werden als über deren Kopplung an die Außenseiten des Grundkörpers 5 und an die Kreislamellen 14 der Irisblende - wesentlich zur Umsetzung des Grundgedankens ist lediglich die Linearbewegung der Lamellen 1", damit die Hauptachse der ellipsenartigen Öffnung 2" nicht ihre Orientierung ändert. Die Bedeutung der Beibehaltung der Achsenausrichtung der ellipsenartigen Öffnung ist bereits im Zusammenhang mit der ersten Ausführungsform erörtert worden.

Wie bei der ersten und zweiten Ausführungsform kann auch hier das Größenverhältnis zwischen der von den beiden Lamellen 1" definierten ellipsenartigen Öffnung 2" der Linearblende und der Irisblende ein anderes sein als das in Fig. 6A - 6F gezeigte. Die ellipsenartige Öffnung 2" kann z.B. kleiner sein, sodass die "Verschlankung" des Lichtdurchlasses größer ist. Des weiteren kann auch wieder ganz auf die Irisblende verzichtet werden, wobei dann die oberen Bereiche der ellipsenartigen Öffnung 2" nicht durch die Kreislamellen 13 der Irisblende, sondern durch eine Scheibe mit einer festen runden Öffnung gebildet werden und das Abblenden lediglich durch die Linearverschiebung der Lamellen 1" erfolgt, die wiederum durch eine geeignete Einrichtung, die z.B. dem Abschlussring 6 der zweiten Ausführungsform mit seinen gekrümmten Nuten 8 ähneln kann, gehalten und verschoben werden können.

Für alle oben beschriebenen Ausführungsformen gilt, dass sie die von den Anamorphoten bekannte Bildästhetik umsetzen, gegenüber den Anamorphoten jedoch deutliche Vorteile aufweisen. Zunächst entfallen die optischen Bildfehler der Anamorphoten, d.h. die tonnenförmige geometrische Verzeichnung, die insbesondere bei kurzen Brennweiten zu durchaus störenden Krümmungen gerader Linien führt, sowie die Aberrationen, durch die im Bildfeld im oberen und unteren Bereich sowie in den Ecken und an den seitlichen Rändern Unschärfen entstehen, die sich bei voll geöffneter Blende störend bemerkbar machen. Des weiteren erlaubt die vorliegende Erfindung den Einsatz schärferer Objektive mit höherer Lichtstärke und größerer Naheinstellgrenze, und der Bildausschnitt ändert sich nicht beim Fokussieren, wie es bei Anamorphoten der Fall ist. Weiterhin werden keine angepassten Sensoren, die dem durch den Anamorphoten gestauchten Bildausschnit entsprechen, benötigt, da keine reale Stauchung des aufgezeichneten Bildes stattfindet. Darüberhinaus wird die Unhandlichkeit der Anamorphoten (aufgrund von deren Größe und Gewicht) vermieden, da die erfindungsgemäße Blende mit herkömmlichen ausschliesslich aus sphärischen Linsen bestehenden Objektiven eingesetzt werden kann. Aus diesem Grund ist das gesamte optische System auch kostengünstiger, da die sphärischen Objektive bzw. deren Kamerasysteme einfach umgerüstet werden können unter Vermeidung des aufwendigen Herstellungsverfahrens der Anamorphoten, was auch zu deren geringerer Robustheit führt. Darüberhinaus erlaubt die Blende eine weitaus höhere Flexibilität, da der Stauchungseffekt je nach Ausführungsform über die sich beim Abblenden ändernde Form der ellipsenartigen Blende variiert werden kann, ohne dass (wie bei den Anamorphoten) das Objektiv gewechselt werden muss.

## Patentansprüche

1. Blende für ein Foto- oder Filmkameraobjektiv bzw. für eine Foto- oder Filmkamera, **dadurch gekennzeichnet, dass** die Blende eine Einrichtung mit einer Scheibe (1), die eine feste ellipsenartige Öffnung (2) definiert, sowie eine Irisblende aufweist, wobei die Hauptachse der ellipsenartigen Öffnung (2) kleiner oder gleich dem Durchmesser der vollständig geöffneten Irisblende ist, sodass sich der Lichtdurchlass der Blende beim Abblenden von der anfänglich ellipsenartigen Form (2) bei voller Öffnung der Irisblende hin zur von Kreislamellen (14) der Irisblende definierten Kreisform entwickelt.

2. Blende nach Anspruch 1, **dadurch gekennzeichnet, dass** die Hauptachse der ellipsenartigen Öffnung (2) vertikal verläuft.

## Claims

1. Aperture for a photographic or film camera lens or for a photographic or film camera, **characterized in that** the aperture has a device with a disc (1) defining a fixed ellipse-like opening (2) and an iris, wherein the major axis of the ellipse-like opening (2) is less than or equal to the diameter of the fully opened iris, so that the light transmission of the aperture upon stopping down develops from the initial elliptical shape (2) at full opening of the iris towards the circle shape defined by circular blades (14) of the iris.

2. Aperture according to claim 1, **characterized in that** the major axis of the ellipse-like opening (2) is vertical.

## Revendications

1. Diaphragme pour objectif d'appareil de prise de vues ou pour appareil photo ou caméra, **caractérisé en ce que** le diaphragme comporte un dispositif avec un disque (1), qui définit une ouverture (2) fixe elliptique, ainsi qu'un diaphragme à iris, sachant que l'axe principal de l'ouverture elliptique (2) est plus petite que ou identique au diamètre du diaphragme à iris complètement ouvert de telle manière que le passage de la lumière du diaphragme se développe lors du réglage du diaphragme d'une forme initialement elliptique (2) à ouverture pleine du diaphragme à iris à une forme circulaire définie par des lamelles circulaires (14) du diaphragme à iris.

2. Diaphragme selon la revendication 1, **caractérisé en ce que** l'axe principal de l'ouverture elliptique (2) passe verticalement.
